(19) Europäisches Patentamt
European Patent Office
Office européen des brevets

(11) Publication number: 0 021 674 A1

(12) EUROPEAN PATENT APPLICATION

(21) Application number: 80301895.1

(22) Date of filing: 06.06.80

(51) Int. Cl.[3]: C 01 B 33/28
B 01 J 29/28

(30) Priority: 11.06.79 US 47535

(43) Date of publication of application: 07.01.81 Bulletin 81/1

(84) Designated Contracting States: BE DE FR GB IT NL

(71) Applicant: MOBIL OIL CORPORATION
150 East 42nd Street
New York New York 10017(US)

(72) Inventor: Rollmann, Louis Deane
3 Dorann Avenue
Princeton Mercer County, New Jersey(US)

(72) Inventor: Valyocsik, Ernest William
960 Randolph Drive
Yardley Bucks County Pennsylvania(US)

(74) Representative: Cooper, John Anthony
Mobil Court 3 Clements Inn
London WC2A 2EB(GB)

(54) **Synthesis of large crystal zeolite ZSM-5 and zeolite so made.**

(57) Synthesis of large crystal zeolite ZSM-5 having an average particle size diameter between about 1 and 100 microns prepared from a reaction mixture of alumina, silica, alkali metal oxide, water and tetraalkylammonium compounds wherein the resultant $OH^-/SiO_2$ ratio is controlled between about 0.01 and 0.07.

EP 0 021 674 A1

Croydon Printing Company Ltd.

0021674

TITLE MODIFIED
see front page

Synthesis of large crystal zeolite ZSM-5

The present invention relates to a method for producing large crystal zeolite ZSM-5.

Zeolite ZSM-5 is a relatively new zeolite which in its conventionally synthesized aluminosilicate form has the following composition expressed in terms of mole ratios of oxides in the anhydrous state:

$$0.9 \pm 0.2\ M_{2/n}O : Al_2O_3 : xSiO_2$$

wherein M is selected from the group consisting of a mixture of tetraalkylammonium cations, the alkyl groups of which contain 2-5 carbon atoms, and alkali metal cations, expecially sodium and x is at least 5, said cations having the valence n. ZSM-5 has a distinctive X-ray diffraction pattern which further identifies it from other known zeolites. The original alkali metal cations of ZSM-5 can be exchanged by ion exchange with other ions to form species of the zeolite which have exceptional catalytic properties. Zeolite ZSM-5 and its conventional preparation are the subject of U.S. Patent 3,702,886. That patent discloses an average particle size diameter of less than 1/2 micron. By the present invention there is obtained an average particle size diameter between about 1 and 100 microns.

In accordance with the present invention there is provided a method for preparing a large crystal ZSM-5 having an average particle size diameter between about 1 and 100 microns, and having the following formula in terms of mole ratios of oxides in the anhydrous state:

$$0.9 \pm 0.2\ M_{2/n}O : Al_2O_3 : Y\ SiO_2 : zH_2O$$

wherein M is at least one cation having a valence n, Y is at least 5 and z is 0-40. M can be an alkali metal, e.g.

sodium, and tetraalkylammonium cations, the alkyl group containing 2-5 carbon atoms.

Figure 1 shows the effect of $SiO_2/Al_2O_3$ on ZSM-5 crystallization rates;

Figure 2 shows the effect of $OH^-/SiO_2$ on ZSM-5 crystallization rates;

Figure 3 shows the influence of $OH^-/SiO_2$ on size and agglomeration.

Zeolite ZSM-5 has been conventionally prepared by forming a mixture of alumina, silica, alkali metal oxide, water and tetraalkylammonium compounds such that the mixture has a composition, in terms of mole ratios of oxides, falling within the following range:

| | | Broad | Preferred |
|---|---|---|---|
| $Al_2O_3/SiO_2$ | = | 0-0.2 | 0.001-0.05 |
| $H_2O/SiO_2$ | = | 5-200 | 15-50 |
| $OH^-/SiO_2$ | = | 0.07-10.0 | 0.1-0.8 |
| $M/SiO_2$ | = | .01-3.0 | 0.2-2.0 |
| $R/SiO_2$ | = | .01-1.0 | 0.02-0.2 |

wherein M is an alkali metal ion and R is a tetraalkylammonium cation, the alkyl groups of which contain 2-5 carbon atoms. In addition tetramethylammonium ions (TMA) may be present in a $TMA/SiO_2$ ratio of 0.01-0.5. The reaction mixture is maintained at a temperature of from about 100°F (38°C) to about 400°F (204°C) until crystals of ZSM-5 are formed.

Zeolite ZSM-5 possesses a definite distinguishing crystalline structure whose X-ray diffraction pattern shows the following significant lines:

TABLE I

| Interplanar Spacing d (A) | Relative Intensity |
|---|---|
| 11.1 ± 0.3 | S |
| 10.0 ± 0.3 | S |
| 7.4 ± 0.2 | W |
| 7.1 ± 0.2 | W |
| 6.3 ± 0.2 | W |
| 6.04 ± 0.2 | W |
| 5.56 ± 0.1 | W |
| 5.01 ± 0.1 | W |
| 4.60 ± 0.08 | W |
| 4.25 ± 0.08 | W |
| 3.85 ± 0.07 | VS |
| 3.71 ± 0.05 | S |
| 3.04 ± 0.03 | W |
| 2.99 ± 0.02 | W |
| 2.94 ± 0.02 | W |

These values were determined by standard technique. The radiation was the K-alpha doublet of copper, and a scintillation counter spectrometer with a strip chart pen recorder was used. The peak heights, I, and the positions as a function of 2 times theta, where Theta is the Bragg angle, were read from the spectrometer chart. From these, the relative intensities, $100I/I_o$, where $I_o$ is the intensity of the strongest line or peak, and d (obs), the interplanar spacing in A, corresponding to the recorded lines, were calculated. In Table I the relative intensities are given in terms of the symbols W=Weak, S=Strong and VS=Very Strong. It should be understood that this X-ray diffraction pattern is characteristic of all the species of ZSM-5 zeolites. Ion exchange of the sodium ion with cations reveals substantially the same pattern with some minor shifts in interplanar spacing and variation in relative intensity. Other minor

variations can occur depending on the silicon to aluminum ratio of the particular sample, as well as if it has been subjected to thermal treatment.

In the present method of preparing a large crystal ZSM-5 crystalline zeolite, a reaction mixture is prepared comprising sources of alkali metal, alumina, silica, organic nitrogen-containing cations, and water, as before, except that the $OH^-/SiO_2$ ratio is controlled between 0.01 and 0.07 and preferably between 0.03 and 0.06. It has been found in accord with the invention that crystal size increases as the $OH^-/SiO_2$ ratio decreases. The rate goes through a maxiumum and then decreases in this region. Thus there is an optimum rate vs crystal size. The reaction mixture is maintained at a temperature of from about 100°F (38°C) to about 400°F (204°C) for a period of time of from about 1 hour to about 180 days until crystals of ZSM-5 are formed. A more preferred temperature range is from about 180°F (82°C) to about 350°F (177°C) for a period of time at a temperature within such preferred range being from about 2 hours to about 30 days.

It is recalled that in calculating the mole ratio of hydroxide ions/silica, it is conventional to calculate hydroxide by summing moles of $OH^-$, whether added as NaOH, as quaternary ammonium hydroxide (in the case of a conventional preparation), as sodium silicate ($NaOH + SiO_2$), as sodium aluminate ($NaOH + Al_2O_3$), or the like and to subtract from that sum any moles of acid added. Acid may be added simply as HCl, $HNO_3$, $H_2SO_4$, acetic acid, and the like or it may be added as an aluminum sulfate ($Al_2O_3 + H_2SO_4$), chloride ($Al_2O_3$ + HCl), nitrate ($Al_2O_3 + HNO_3$), etc. Each mole of $Al_2O_3$ is itself equivalent to 2 moles of acid in this calculation, since $Al_2O_3$ consumes 2 moles of hydroxide in its conversion to framework aluminate ion. In particular, no contribution is assigned to organic bases such as amines in this calculation.

Amines present in reaction mixtures having an $OH^-/SiO_2$ ratio of 0.01 are protonated when further acid is added. Until said additional acid exceeds the amine present, the pH remaines above 7.

The digestion of the gel particles is carried out until crystals form. The solid product is separated from the reaction medium, as by cooling the whole to room temperature, filtering and water washing.

The composition for the synthesis of synthetic ZSM-5 can be prepared utilizing materials which can supply the appropriate oxide. Such materials which can supply the appropriate oxide. Such materials include aluminates, alumina, silicates, silica hydrosol, silica gel, silicic acid and hydroxides. It will be understood that each oxide component utilized in the reaction mixture for preparing ZSM-5 can be supplied by one or more essential reactants and they can be mixed together in any order. For example, any oxide can be supplied by an aqueous solution, sodium hydroxide or by an aqueous solution of a suitable silicate; the organic nitrogen-containing cation can be supplied by a compound of that cation, such as, for example, a salt. The reaction mixture can be prepared either batchwise or continuously. Crystal size and crystallization time of the ZSM-5 composition will vary with the nature of the reaction mixture employed. In the present case in order to prepare large crystal ZSM-5 zeolite the $OH^-/SiO_2$ ratio will be controlled between 0.01 and 0.07, obtaining crystals having an average particle size diameter between about 1 and 100 microns.

The ZSM-5 composition as prepared hereby has the characteristic X-ray diffraction pattern of conventionally prepared ZSM-5, the values of which are set forth in Table I.

Even though the presently prepared ZSM-5 can often have a low amount of alkali metal, e.g. sodium, ions, as synthesized, and therefore can be utilized as catalytic material for a number of hydrocarbon conversion reactions substantially as synthesized, the original cations of the as synthesized ZSM-5 can be replaced in accordance with techniques well known in the art, at least in part, by ion exchange with other cations. Preferred replacing cations include metal ions, ammonium ions, hydrogen ions and mixtures thereof. Particularly preferred cations are those which render the zeolite catalytically active especially for hydrocarbon conversion. These include hydrogen, rare earth metals, aluminum, metals of Groups IIA, IIIB, IVB, VIB, VIII, IB, IIB, IIIA, IVA. Of the replacing metallic cations, particular preference is given to cations of metals such as rare earth, Mn, Ca, Mg, Zn, Cd, Pd, Ni, Co, Ti, Al, Sn, Fe and Co.

A typical ion exchange technique would be to contact the synthetic ZSM-5 zeolite with a solution of a salt of the desired replacing cation or cations. Although a wide variety of salts can be employed, particular preference is given to cholorides, nitrates and sulfates.

Representative ion exchange techniques are disclosed in a wide variety of patents including United States Patents 3,140,249; 3,140,251; and 3,140,253.

Following contact with the salt solution of the desired replacing cation, the zeolite is then preferably washed with water and dried at a temperatue ranging from 150°F (66°C) to about 600°F (316°C) and thereafter may be calcined in air or other inert gas at temperatures ranging from about 500°F (260°C) to 1500°F (816°C) for periods of time ranging from 1 to 48 hours or more to produce a catalytically-active thermal decomposition product thereof.

Regardless of the cation replacing the cations in the synthesized form of the ZSM-5, the spatial arrangement of the aluminum, silicon and oxygen atoms which form the basic crystal lattices of ZSM-5 remains essentially unchanged by the described replacement of the original cations as determined by taking an X-ray powder diffraction pattern of the ion-exchanged material.

The hereby prepared zeolite ZSM-5 may be used in the conversion of a wide variety of organic compounds, e.g. hydrocarbon compounds and oxygenates such as methanol. Such processes include, for example alkylation of aromatics with olefins, aromatization of normally gaseous olefins and paraffins, aromatization of normally liquid low molecular weight paraffins and olefins, isomerization of aromatics, paraffins and olefins, disproportionation of aromatics, transalkylation of aromatics, oligomerization of olefins and cracking and hydrocracking. All of the foregoing catalytic processes are of value since they result in upgrading of the organic charge being processed. The special catalytic advantages of large crystal size are illustrated in U.S. Patent 4,117,026 for example.

Synthetic ZSM-5 zeolites prepared in accordance hereto can be used either in the organic nitrogen-containing or alkali metal form and hydrogen form or another univalent or multivalent cationic form. They can also be used in intimate combination with a hydrogenating component such as tungsten, vanadium, molybdenum, rhenium, nickel, cobalt, chromium, manganese, or a noble metal such as platinum or palladium where a hydrogenation-dehydrogenation function is to be performed. Such components can be exchanged into the composition, impregnated therein or physically intimately admixed therewith. Such components can be impregnated in or on to ZSM-5 such as, for example, by, in the case of platinum,

treating the zeolite with a platinum metal-containing ion. Thus, suitable platinum compounds for this purpose include chloroplatinic acid, platinous chloride and various compounds containing the platinum amine complex. Combinations of metals and methods for their introduction can also be used.

In the case of many catalysts, it is desired to incorporate the ZSM-5 hereby prepared with another material resistant to the temperatures and other conditions employed in organic conversion processes. Such matrix materials include active and inactive materials and synthetic or naturally occuring zeolites as well as inorganic materials such as clays, silica and/or metal oxides. The latter may be either naturally occurring or in the form of gelatinous precipitates, sols or gels including mixtures of silica and metal oxides. Use of a material in conjunction with the ZSM-5, i.e. combined therewith, which is active, tends to improve the conversion and/or selectivity of the catalyst in certain organic conversion processes. Inactive materials suitably serve as diluents to control the amount of conversion in a given process so that products can be obtained economically and orderly without employing other means for controlling the rate of reaction. Frequently, zeolite materials have been incorporated into naturally occurring clays, e.g. bentonite and kaolin. These materials, i.e. clays, oxides, etc., function, in part, as binders for the catalyst. It is desirable to provide a catalyst having good crush strength, because in a petroleum refinery the catalyst is often subjected to rough handling, which tends to break the catalyst down into powder-like materials which cause problems in processing.

Naturally occurring clays which can be composited with the hereby synthesized ZSM-5 catalyst include the montmorillonite and kaolin family, which familes include the sub-bentonites, and the daolins commonly known as Dixie, McNammee, Georgia

and Florida clays or others in which the main mineral constituent is halloysite, kaolinite, dickite, nacrite, or anaüxite. Such clays can be used in the raw state or initially subjected to calcination, acid treatment or chemical modification.

In addition to the foregoing materials, the ZSM-5 catalyst hereby synthesized can be composited with a porous matrix material such as silica-alumina, silica-magnesia, silica-zirconia, silica-thoris, silica-beryllia, silica-titania as well as ternary compositions such as silica-alumina-thoria, silica-alumina-zirconia, silica-alumina-magnesia and silica-magnesia-zirconia. The matrix can be in the form of a cogel. A mixture of these components could also be used. The relative proportions of finely divided crystalline aluminosilicate ZSM-5 and inorganic oxide gel matrix vary widely with the crystalline aluminosilicate content ranging from about 1 to about 90 percent by weight and more usually in the range of about 10 to about 70 percent by weight of the composite.

In employing the ZSM-5 catalyst of this invention for polymerization of olefin containing liquid or gaseous charge stocks, such charge stocks can be polymerized at temperatures between 550 (288°C) and 850°F (454°C) at an hourly space velocity of between 0.5 and 50 WHSV and a pressure between 0.1 and 800 psig.

In employing the catalyst of the present invention for aromatization of gaseous or liquid charge stocks which may be olefinic or paraffinic with or without aromatics present, such stocks can be aromatized at temperatures between 800 and 1200°F and pressures from 1 to 10 atmospheres and space velocities between 0.1 and 10 WHSV.

In order to more fully illustrate the nature of the invention and the manner of practicing same, the following examples are presented.

In the examples below, a process variable study on rates and crystal morphology in ZSM-5 synthesis are examined using as variables the following mole ratios of reaction mixture components: (160°C with stirring)

| | |
|---|---|
| $SiO_2/Al_2O_3$ | $Na/SiO_2$ |
| $H_2O/SiO_2$ | $TPA/SiO_2$ |
| $OH/SiO_2$ | $TMA/SiO_2$ |

Unless noted all experiments used Q-brand, sodium silicate, $Al_2(SO_4)_3.16H_2O$, $H_2SO_4$, and TPA Br.

EXAMPLES 1-18

Process Variables in ZSM-5 Crystallization
160°C Stirred Unless Noted

| Example | $Si/Al_2$ | $H_2O/Si$ | OH/Si | Na/Si | TPA/Si | Hrs | Product |
|---|---|---|---|---|---|---|---|
| 1 | 90 | 40 | 0.20 | 0.59 | 0.10 | 3 | Amorphous |
| 2 | 90 | 40 | 0.10 | 0.59 | 0.10 | 3 | 50% ZSM-5 |
| 3 | 90 | 40 | 0.05 | 0.59 | 0.10 | 3 | 60% ZSM-5 |
| 4 | 90 | 40 | 0.01 | 0.59 | 0.10 | 3 | 10% ZSM-5 |
| 5 | 90 | 40 | 0.10 | 0.59 | 0.10 | 7 | 100 ZSM-5 |
| 6 | 90 | 40 | 0.01 | 0.59 | 0.10 | 7 | 100 ZSM-5 |
| 7 | 90 | 40 | 0.10 | 0.59 | 0.60 | 7[a] | 100 ZSM-5 |
| 8 | 90 | 40 | 0.50 | 0.59 | 0.60 | 7 | 100% ZSM-5 |

From the foregoing Examples 1-8 the process variable effects can be summarized as follows, first as they influence rates and then crystal morphology.

The rates are strongly dependent on $SiO_2/Al_2O_3$ and $OH/SiO_2$ ratios, as shown in Figures 1 and 2, and decrease with decreasing $SiO_2/Al_2O_3$ ratio. The data suggest that this trend is intrinsic, i.e., that it can be only partially overcome by changes in reaction mixture formulation, such as $TPA/SiO_2$.

Concentrating on a single ZSM-5 preparation (from gels of $SiO_2/Al_2O_3 = 90$), $OH/SiO_2$ emerges as the dominant variable. As shown in Figure 2, a pronounced optimum exists in the rate curve at low $OH/SiO_2$ ratio (about 0.05). $H_2O/SiO_2$ and $Na/SiO_2$ have little effect on rate at 160°C, over a range of compositions.

$OH/SiO_2$ influences both size and agglomeration, as shown in Figure 3. At high $OH/SiO_2$ (0.3) small, highly dispersed crystals are found whereas large, well-defined ones result at the other extreme ($OH/SiO_2 = 0.01$). At the very high $OH/SiO_2$, crystal growth and dissolution would be competing and an equilibrium, to produce smaller crystals, would result.

At $OH/SiO_2 = 0.01$ the dissolution process would be largely absent and crystallization more orderly, yielding the large, well-defined materials having an average crystal diameter o 3-5 microns.

WHAT IS CLAIMED IS:

1. In a method for preparing a crystalline zeolite ZSM-5 from a reaction mixture containing sources of an alkali metal oxide, $R_2O$, an oxide of aluminum, an oxide of silicon and water, wherein R is $C_2$-$C_5$ tetraalkylammonium cation and maintaining said mixture under crystallization conditions, the improvement which comprises conducting said crystallization at a resultant $OH^-/SiO_2$ ratio of between about 0.01 and 0.07.

2. The method of Claim 1 wherein the $OH^-/SiO_2$ ratio is between about 0.03 and about 0.06.

3. The method of Claim 1 wherein R is tetrapropylammonium.

4. The method of Claim 3 wherein said reaction mixture additionally contains tetramethylammonium ion in a tetramethylammonium/$SiO_2$ ratio between about 0.01 and about 0.5.

5. The method according to Claim 1 wherein said crystallization produces a crystalline zeolite ZSM-5 having an average crystal diameter of between about 1 and 100 microns.

6. The crystalline zeolites produced by the method of Claims 1, 2, 3, 4 or 5.

FIG. I

Effect of $SiO_2/Al_2O_3$ on ZSM-5 Crystallization Rates
$H_2O/SiO_2 = 40$, $OH/SiO_2 = 0.01$, $Na/SiO_2 = 0.59$
$TPA/SiO_2 = 0.10$, 160°C, stirred, 7 hrs.

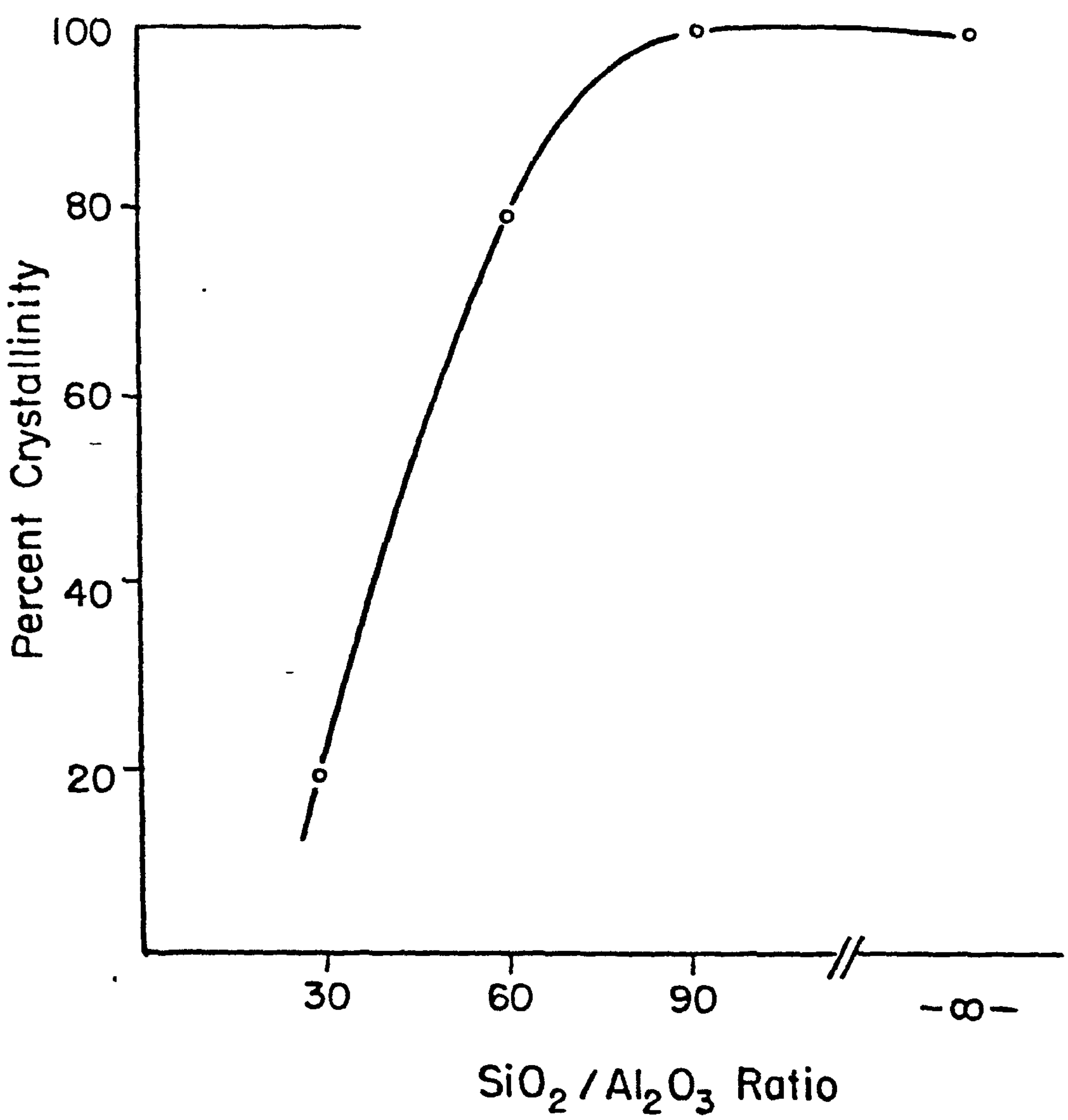

FIG. 2

Effect of $OH/SiO_2$ on ZSM-5 Crystallization Rates
$SiO_2/Al_2O_3 = 90$, $H_2O/SiO_2 = 40$, $Na/SiO_2 = 0.59$
$TPA/SiO_2 = 0.10$, 160°C, stirred

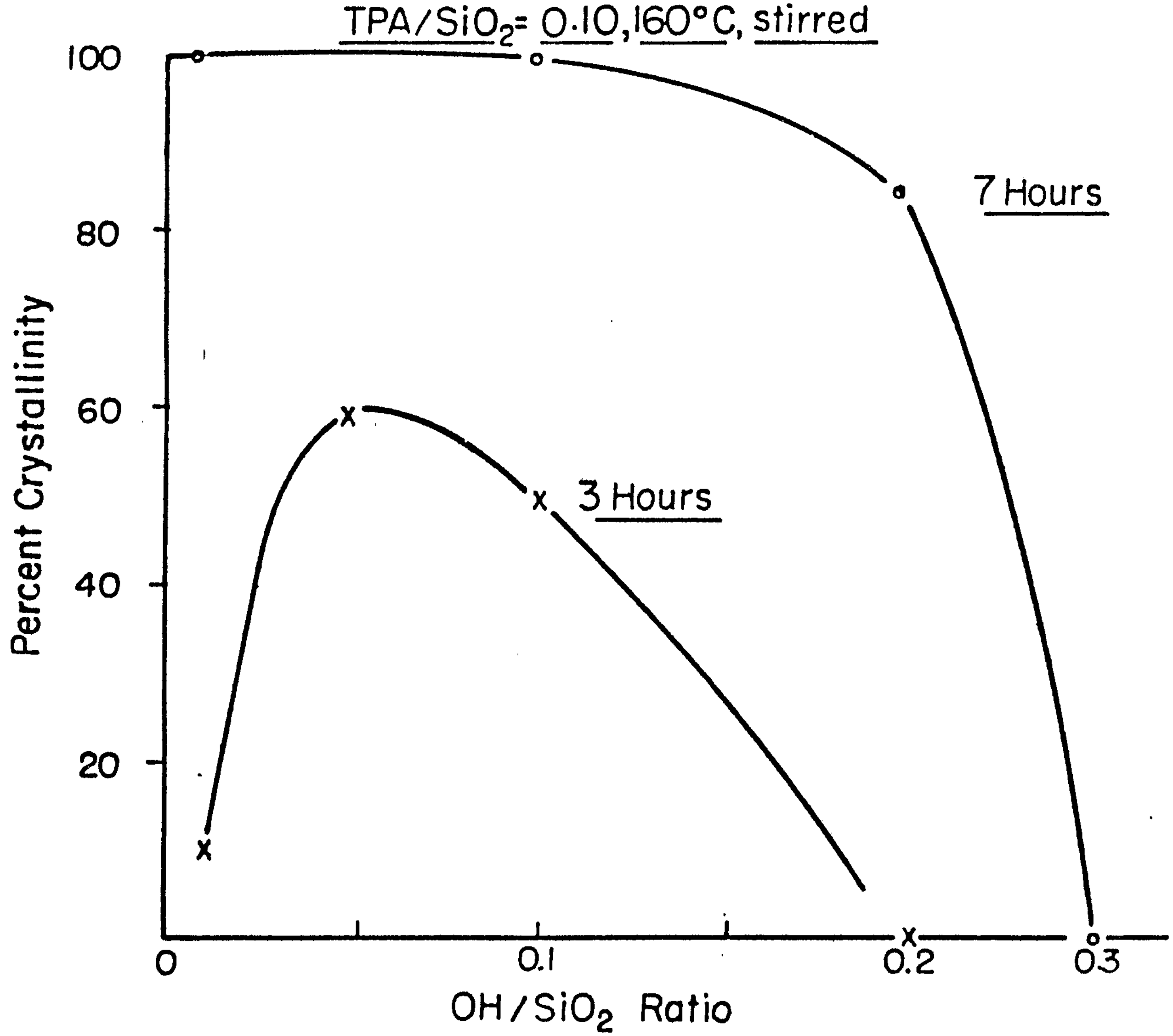

FIG. 3

Effect of $OH/SiO_2$ on
ZMS-5 Morphology
160°C, stirred, $SiO_2/Al_2O_3$ = 90

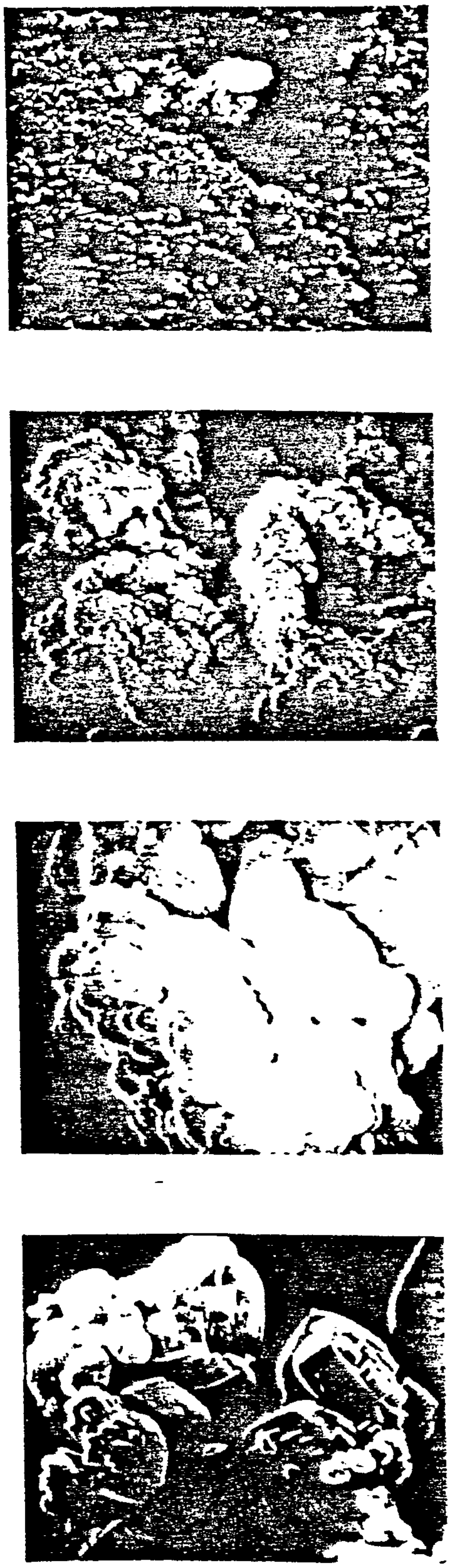

90% ZSM - 5
$OH/SiO_2$ = 0.30
No example given
63 hrs.

85% ZSM - 5
$OH/SiO_2$ = 0.20
No example given
6 hrs.

100% ZSM - 5
$OH/SiO_2$ = 0.10
Product of example 5
6 hrs.

100% ZSM - 5
$OH/SiO_2$ = 0.01
Product of example 6
6 hrs.

0021674

European Patent Office

# EUROPEAN SEARCH REPORT

Application number

EP 80 30 1895.1

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| X | GB - A - 2 002 733 (MOBIL OIL)<br>* claims 1 to 4; page 3, lines 32 to 48 *<br>-- | 1-5 | C 01 B 33/28<br>B 01 J 29/28 |
| X | DE - A1 - 2 817 577 (MOBIL OIL)<br>* claim 3; page 22 *<br>-- | 1-3 | |
| | US - A - 4 139 600 (L.D. ROLLMANN et al.)<br>* column 2, line 39 to column 3, line 41; column 6, lines 41 to 58 *<br>-- | 1 | TECHNICAL FIELDS SEARCHED (Int.Cl.3)<br>B 01 J 29/00<br>C 01 B 33/28 |
| A | DE - A1 - 2 822 725 (MOBIL OIL)<br>-- | | |
| D | US - A - 3 702 886 (R.J. ARGAUER et al.)<br>-- | | |
| D | US - A - 4 117 026 (W.O. HAAG et al.)<br>---- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 22-09-1980 | KESTEN |

EPO Form 1503.1 06.78